# EUROPÄISCHE PATENTSCHRIFT

(11) **EP 3 600 923 B1**
(45) Veröffentlichungstag und Bekanntmachung des Hinweises auf die Patenterteilung: **21.04.2021**
(21) Anmeldenummer: 18708928.9
(22) Anmeldetag: 20.02.2018
(51) Int. Cl.: B60G 13/00, B60G 15/06, F16B 31/04, F16B 41/00, F16B 9/02

(54) **STÜTZLAGER EINES SCHWINGUNGSDÄMPFERS IN DER RADAUFHÄNGUNG EINES FAHRZEUGS**
SUPPORT BEARING OF A VIBRATION DAMPER IN A WHEEL SUSPENSION OF A VEHICLE
PALIER DE SUPPORT D'UN AMORTISSEUR DE VIBRATIONS DANS LA SUSPENSION DE ROUE D'UN VÉHICULE

(30) Priorität: 27.03.2017 DE 102017205091
(43) Veröffentlichungstag der Anmeldung: 05.02.2020
(73) Patentinhaber: Bayerische Motoren Werke Aktiengesellschaft, 80809 München (DE)
(72) Erfinder: STEINBOCK, Mike, 86937 Scheuring (DE); BICKEL, Martin, 80538 München (DE)
(86) Internationale Anmeldenummer: PCT/EP2018/054188
(87) Internationale Veröffentlichungsnummer: WO 2018/177657

(56) Entgegenhaltungen:
- DE-A1- 1 780 504
- DE-A1-102005 014 325
- US-A- 3 913 649
- US-A- 5 350 183
- US-A1- 2004 089 990
- Skf: "SKF lock nuts - the components for quick location", , 1. Januar 1999 (1999-01-01), XP055473923, Gefunden im Internet: URL:http://www.brg-catalogues.com/Catalogu e_store/SKF/4412%20I%20E%20Locknuts.pdf [gefunden am 2018-05-09]

## Beschreibung

Die Erfindung betrifft ein Stützlager eines Schwingungsdämpfers oder einer Dämpfer-Feder-Einheit in der Radaufhängung eines Fahrzeugs nach dem Oberbegriff des Anspruchs 1. mit einem an einer Karosseriestruktur des Fahrzeugs abgestützten und kraftschlüssig befestigten Stützlagerflansch, welcher ein ringförmiges Elastomerelement umgreift, in welchem ein Element des Dämpfers und insbesondere dessen Kolbenstange aufgehängt ist. Zum Stand der Technik wird neben DE 10 2014 218 800 A, DE 10 2008 010 541 A1 und DE 10 2012 002 806 A1 insbesondere auf die DE 197 19 301 A1 sowie die US 2004/089 990 A1 und die DE 10 2005 014 325 A1 verwiesen US2004089990 beschreibt ein Stützlager nach dem Oberbegriff des Anspruchs 1.

Grundsätzlich verbreitet und auch in den genannten Schriften gezeigt ist eine kraftschlüssige Anbindung des Dämpfer-Stützlagers an der Fahrzeug-Karosserie mittels zumeist mehrerer, bspw. dreier Schrauben, welche ringförmig um die Längsachse des Schwingungs-Dämpfers verteilt den sog. Stützlagerflansch gegen eine Anlagefläche der Karosseriestruktur verspannen. Aus Steifigkeits- und Festigkeitsgründen muss dabei der Durchmesser des Rings, welcher durch die (zumeist drei) Befestigungs-Schrauben gebildet ist, relativ groß gewählt werden, was wegen des Bauraumbedarfs nachteilig sein kann. Diesbezüglich vorteilhafter ist eine aus der oben letztgenannten Schrift bekannte Anordnung mit einer Zentralverschraubung. Allerdings hat sich gezeigt, dass hier ein gewisser Verbesserungsbedarf besteht, um diese Zentralverschraubung absolut sicher zu gestalten (=Aufgabe der vorliegenden Erfindung).

Die Lösung dieser Aufgabe ergibt sich mit den Merkmalen des Anspruchs 1 und ist für ein Stützlager nach dessen Oberbegriff dadurch gekennzeichnet, dass eine über die Gestaltung der Stützlager-Mutter und des Gewindes hinausgehende Maßnahme zur Erhöhung der Vorspannkraft in der Gewinde-Verbindung zwischen der Stützlager-Mutter und dem Kragen vorgesehen ist, wofür der Kragen eine dessen Elastizität in Richtung der Längsachse des Gewindes erhöhende Formgebung aufweist und wofür bevorzugt zwischen der Stützlager-Mutter und der Karosseriestruktur ein Spann-Hilfselement eingespannt ist. Vorteilhafte Weiterbildungen sind Inhalt der Unteransprüche.

Anstelle mehrerer im üblichen Stand der Technik vorgesehener Schrauben, welche die kraftschlüssige Verbindung zwischen dem Stützlagerflansch und der Karosseriestruktur herstellen, ist eine (ebenfalls bereits bekannte) Zentralverschraubung realisiert, mit einem nach Art einer Mutter - hier Stützlager-Mutter genannt - oder Überwurfmutter gestalteten Element, wobei eine Überwurfmutter-Ausbildung vorliegend auch als Stützlagerdeckel bezeichnet wird. Dieses Element weist ein Innengewinde auf, mit welchem es mit dem geeignet gestalteten, nämlich mit einem hier sog. Kragen versehenen Stützlagerflansch verschraubt ist. Dieser Kragen weist ein entsprechendes Außengewinde auf und ragt von einer Karosserieanlagefläche des Stützlagerflansches kreis(ring)förmig zur und in Richtung der Dämpfer-Längsachse abstehend durch eine Durchtrittsöffnung in der Karosseriestruktur hindurch, so dass nach festem Aufschrauben des besagten Elements (Stützlager-Mutter oder Überwurfmutter bzw. Stützlagerdeckel) auf diesem Kragen ein als Randringabschnitt bezeichnetes Ringsegment der Karosseriestruktur, welches bzw. welcher die besagte Durchtrittsöffnung umgibt, eingespannt ist.

Dabei kann zwischen dem besagten Element, nämlich der Stützlager-Mutter bzw. Überwurfmutter oder dem Stützlagerdeckel einerseits und dem Randringabschnitt (der Karosseriestruktur) andererseits ein sog. Spann-Hilfselement vorgesehen sein, welches zum einen als kraftschlüssige Schraubensicherung wirken kann, ähnlich einer Federscheibe oder einer zu solchen Zwecken verwendeten Tellerfeder, und welches stets für eine ausreichende Spannkraft zwischen der Stützlager-Mutter (oder dgl.) und dem Stützlager (bzw. dessen Kragen) sorgt. Alternativ oder zusätzlich kann zur Gewährleistung einer unter allen Umständen ausreichenden Spannkraft (bezüglich des Randringabschnitts der Karosseriestruktur) zwischen der Stützlager-Mutter und dem Stützlagerflansch letzterer geeignet zumindest geringfügig elastisch verformbar ausgebildet sein.

Somit kann der Stützlagerflansch mit einem kreisringförmigen und einen Hohlzylinder bildenden Kragen, dessen Zylinderachse zumindest annährend mit der Längsachse des Schwingungsdämpfers zusammenfällt, eine Durchtrittsöffnung in der Karosseriestruktur soweit durchdringen, dass auf ein auf der Außenwand dieses Kragens vorgesehenes Gewinde eine Mutter (als Stützlager-Mutter bezeichnet) oder ein nach Art einer Überwurfmutter gestalteter Stützlagerdeckel aufschraubbar und aufgeschraubt ist, welche (Stützlager)-Mutter oder welcher Stützlagerdeckel sich unter Zwischenlage eines Spann-Hilfselements an der Karosseriestruktur abstützend den Stützlagerflansch zur Karosseriestruktur hin zieht, so dass ein die Durchtrittsöffnung umgebender Randringabschnitt der Karosseriestruktur zwischen dem Stützlagerflansch und dem Spann-Hilfselement eingespannt ist.

Nach der Erfindung weist der genannte Kragen eine dessen Elastizität in Richtung der Längsachse des Gewindes erhöhende Formgebung aus, so dass möglicherweise kein Spann-Hilfselement benötigt wird. Auch hier ist eine auf das Gewinde auf der Außenwand dieses Kragens aufgeschraubte Stützlager-Mutter oder ein nach Art einer Überwurfmutter gestalteter Stützlagerdeckel vorgesehen, welche oder welcher sich (letztlich, d.h. gegebenenfalls unter Zwischenschaltung eines weiteren Bauteils) an der Karosseriestruktur abstützend den Stützlagerflansch zur Karosseriestruktur hin zieht, so dass ein die Durchtrittsöffnung umgebender Randringabschnitt der Karosseriestruktur zwischen dem Stützlagerflansch und der Stützlager-Mutter oder dem Stützlagerdeckel sicher und zuverlässig eingespannt ist.

Indem der genannte Kragen des Stützlagerflansches in Richtung der Längsachse des genannten (auf dem Kragen vorgesehenen und mit der Stützlager-Mutter zusammenwirkenden) Gewindes betrachtet geringfügig elastisch verformbar ist bzw. eine dessen Elastizität erhöhende Formgebung aufweist, d.h. dehnbar (gegenüber einem anderen Abschnitt des Stützlagerflansches, mit welchem dieser auf der der Stützlager-Mutter gegenüberliegenden Seite an der Karosseriestruktur anliegt) ausgebildet ist, wird die Vorspannung beim Verspannen signifikant erhöht, womit sich eine sichere Schraubverbindung einstellt.

Eine solche Dehnung beim Verspannen der Schraubverbindung kann dabei auch dadurch gefördert sein, dass im Übergangsbereich zwischen einer sog. Grundstruktur des Stützlagerflansches und dem besagten Kragen irgendwelche MaterialSchwächungen oder Material-Aussparungen vorgesehen sind, die es dem Kragen ermöglichen, beim Festziehen der Stützlager-Mutter gelängt zu werden bzw. sich zumindest geringfügig von der Grundstruktur des Stützlagerflansches weg zu bewegen. Auch damit ist wie beim Vorsehen eines Spann-Hilfselements eine erfindungsgemäße Zentralverschraubung über die gesamte Lebensdauer des Fahrzeugs unter allen möglichen Betriebszuständen kraftschlüssig gesichert bzw. sicherbar, indem ein aus einem möglichen "Setzen" resultierender Setzkraftverlust (zwischen den gegeneinander verspannten Oberflächen) durch die erfindungsgemäße Vorspannung kompensiert werden kann.

Bekanntlich waren in früheren Zeiten zu einem solchen Zweck, nämlich als kraftschlüssige Schraubensicherung, sogar genormte Federringe vorgesehen, die sich jedoch als wenig wirkungsvoll erwiesen haben. Ein vorliegend vorgeschlagenes Spann-Hilfselement oder eine geeignet elastische Ausbildung des Stützlagerflansches bzw. dessen Kragens hingegen ist wirksam. Dabei kann ein Spann-Hilfselement vorzugsweise solchermaßen ausgelegt sein, dass es bspw. ähnlich einer Tellerfeder gestaltet ist und somit (tatsächlich) als zusätzliches Spannelement beim Verspannen der Schraubverbindung zwischen dem Stützlagerflansch und der genannten Stützlager-Mutter (bzw. Überwurfmutter oder Stützlagerdeckel) wirkt. Daneben kann ein vorgeschlagenes Spann-Hilfselement als Unterlegscheibe wirken und somit verhindern, dass eine Lackschicht, welche auf den besagten Randringabschnitt der Karosserie aufgebracht ist oder wurde, bevor die erfindungsgemäße Verschraubung des Stützlagerflansches dargestellt wird, durch das Festdrehen der besagten Stützlager-Mutter oder Überwurfmutter oder dgl. beschädigt wird. Vorzugsweise ist wegen der einfacheren Zugänglichkeit der Stützlagerflansch mit seinem Kragen von der dem Schwingungsdämpfer oder der Radaufhängung zugewandten Seite der Karosseriestruktur her durch die Durchtrittsöffnung hindurch gesteckt.

Wenn das Spann-Hilfselement einen auf der Karosseriestruktur aufliegenden Ringflansch und einen sich hieran direkt oder über einen sog. Übergangsabschnitt indirekt anschließenden und sich in Richtung der Längsachse des Gewindes zur Stützlager-Mutter oder zur Überwurfmutter (Stützlagerdeckel) hin erstreckenden hohlzylindrischen sog. Kraftübertragungsabschnitt besitzt, dessen Durchmesser geringer ist als der Außendurchmesser oder ein mittlerer Durchmesser des Ringflansches, so kann der zwischen dem Spann-Hilfselement und der Karosseriestruktur wirkende Durchmesser im Hinblick auf ausreichend starke Verspannung sowie hohe Steifigkeit und Festigkeit ausreichend groß gewählt werden und benötigt dennoch weniger Bauraum als eine bislang übliche Verschraubung mit mehreren ringförmig angeordneten Schrauben. Hingegen liegt die Reibfläche zwischen dem Spann-Hilfselement und der auf dieses einwirkenden Stützlager-Mutter auf einem geringeren Durchmesser (als demjenigen des Ringflansches des Spann-Hilfselements), so dass beim Verschrauben bzw. Verspannen geringere Reibungsverluste auftreten als wenn die Stützlager-Mutter selbst einen Durchmesser in der Größe des (bspw. mittleren) Durchmessers des Ringflansches des Spann-Hilfselementes besäße. (Der mittlere Durchmesser des Ringflansches ist dabei der Mittelwert zwischen dessen Außendurchmesser und dessen Innendurchmesser). Zusätzlich erlaubt das Spann-Hilfselement durch den ermöglichten Federweg (der Tellerfeder), dass der Aufbau des für eine sichere kraftschlüssige Verbindung benötigten Drehmoments über einen größeren Winkelbereich erzeugt werden kann. Da nämlich eine Nachgiebigkeit innerhalb der Schraubverbindung durch das Spann-Hilfselement bereit gestellt wird ergibt sich eine vergrößerte Anzahl von Umdrehungen der Stützlager-Mutter, weshalb bei der Montage ein vorgegebenes Anzugsmoment exakter eingehalten werden kann.

Eine besonders vorteilhafte und gewünschte Federwirkung des Spann-Hilfselements ist darstellbar, wenn das Spann-Hilfselement bei Betrachtung von außen einen gegenüber der Längsachse des Gewindes geneigten linearen oder konvex oder besonders vorteilhaft konkav gekurvten Übergangsabschnitt zwischen dem Ringflansch und dem hohlzylindrischen Kraftübertragungsabschnitt besitzt, welcher bei Betrachtung von der Längsachse des Gewindes aus gegenüber der Längsachse des Gewindes ebenfalls geneigt solchermaßen verläuft, dass der Kraftübertragungsabschnitt in Achsrichtung des Gewindes betrachtet nicht auf dem Randringabschnitt der Karosseriestruktur aufliegt. Damit ist das Spann-Hilfselement nach Art einer Tellerfeder geformt und besitzt eine Federeigenschaft in Richtung der Längsachse des besagten Gewindes. Dabei kann die Wandstärke insbesondere des Übergangsabschnittes im Hinblick auf eine gewünschte Federrate geeignet festgelegt oder ausgelegt sein oder werden.

In diesem Zusammenhang eröffnet sich ein weiterer Auslegungsspielraum, wenn am Spann-Hilfselement zwischen dem Ringflansch und dem hohlzylindrischen Kraftübertragungsabschnitt und/oder insbesondere am Übergangsabschnitt in Umfangsrichtung betrachtet mehrere versteifende Rippen vorgesehen sind. Diese Rippen könnten in einer Projektion auf die besagte Gewinde-Längsachse betrachtet in Richtung dieser, dabei jedoch tatsächlich gegenüber dieser geneigt verlaufen. Dabei können solche Rippen insbesondere am Übergangsabschnitt außenseitig (d.h. auf der der Gewinde-Längsachse abgewandten Seite) oder innenseitig (d.h. auf der der Gewinde-Längsachse zugewandten Seite) vorgesehen sein. Andere Versteifungsmaßnahmen sind selbstverständlich ebenso möglich. Insbesondere kann auch durch geeignete Material-Auswahl oder eine Kombination verschiedener Werkstoffe für verschiedene Bestandteile insbesondere des Spann-Hilfselements, aber auch des Stützlagerflansches, eine gewünschte Federwirkung (und somit Vorspannkraft) bei ausreichender Festigkeit eingestellt werden.

Letzteres wird nach der Erfindung durch eine Federwirkung des Stützlagerflansches selbst erzielt werden. Insbesondere wird hierfür der besagte Kragen des Stützlagerflansches eine gewisse oder eine durch geeignete Maßnahmen erhöhte Elastizität aufweisen, so dass sich dieser beim Verspannen der kraftschlüssigen Schraubverbindung insbesondere in Richtung der Längsachse des zugehörigen bzw. genannten Gewindes verformt oder dehnt. Hierfür kann neben einer geeigneten Materialeigenschaft insbesondere gemäß vorliegender Erfindung auch eine geeignete Formgebung vorgesehen sein, wobei sich dies nicht nur auf den Kragen selbst, sondern auch auf dessen Anordnung oder Einbindung im Stützlagerflansch bezieht. Beispielsweise kann eine solche elastizitätserhöhende Formgebung des Kragens durch mehrere Sektoren oder Segmente mit gegenüber einem benachbarten Abschnitt reduzierter Wandstärke gebildet sein, wobei unter einer reduzierten Wandstärke auch ein abschnittsweiser vollständiger Durchbruch ohne jegliches Material zu verstehen ist.

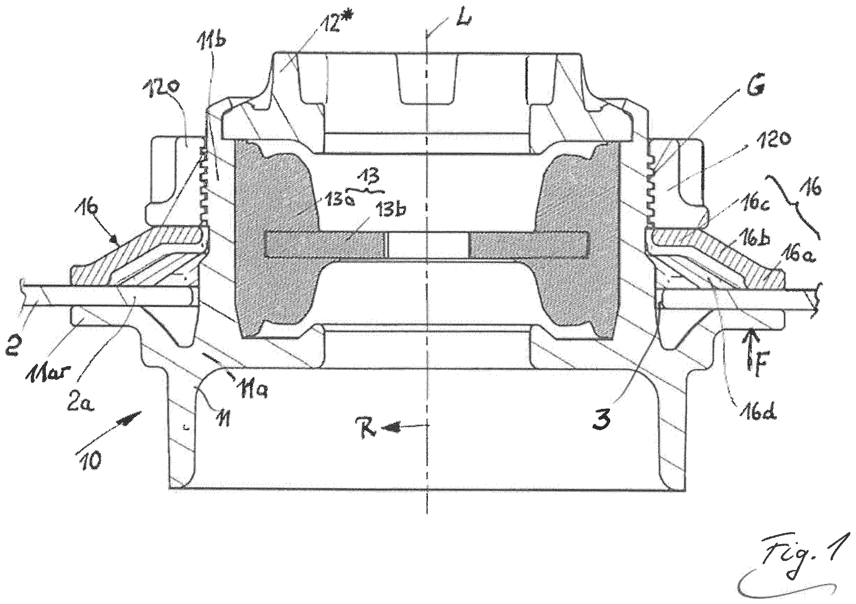

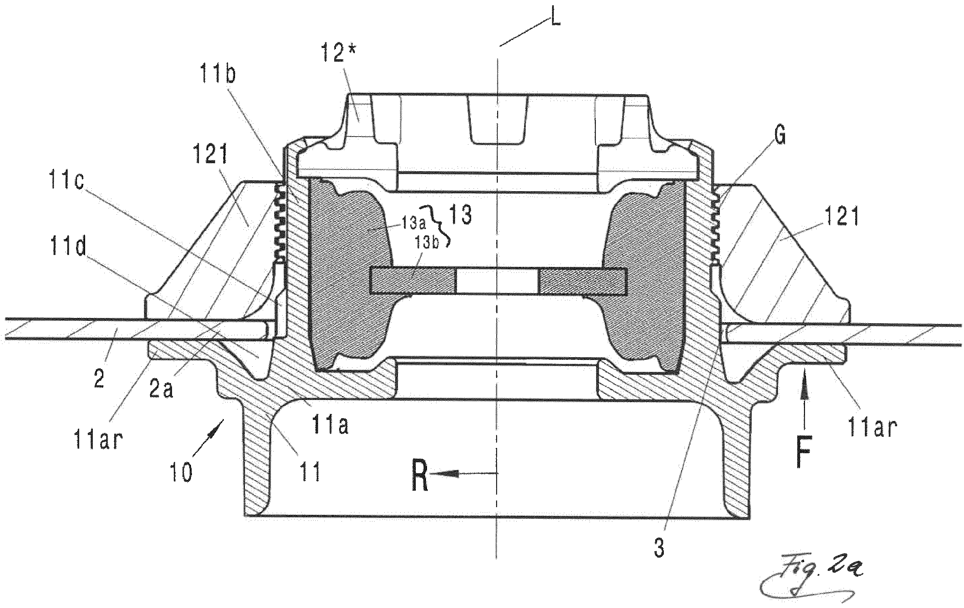

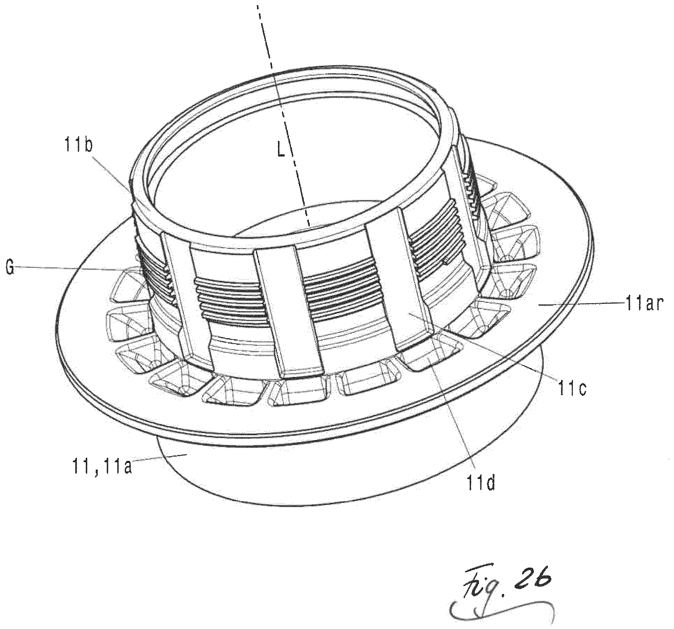

Weitere Merkmale und Vorteile - auch zu den abhängigen Ansprüchen - gehen aus der folgenden Beschreibung der beigefügten Figuren von zwei Ausführungsbeispielen eines erfindungsgemäßen Stützlagers hervor. Dabei zeigt Figur 1 ein erstes Ausführungsbeispiel im Schnitt, während in Fig.2a in einem vergleichbaren Schnitt ein zweites Ausführungsbeispiel dargestellt ist, dessen erfindungsgemäßer Stützlagerflansch allein in isometrischer Ansicht in Fig.2b dargestellt ist. Erfindungswesentlich können dabei sämtliche näher beschriebenen Merkmale sein.

Zunächst auf die Figuren 1, 2a Bezug nehmend ist in diesen lediglich ein Stützlager 10 für eine Kolbenstange eines üblichen Schwingungsdämpfers in der Radaufhängung eines zweispurigen Fahrzeugs gezeigt, nicht jedoch diese besagte Kolbenstange, welche sich in Richtung einer figürlich dargestellten Längsachse L erstreckt, die - wie üblich die Symmetrie- oder Rotationsachse des näherungsweise rotationssymmetrischen Stützlagers 10 ist, über welches die genannte Kolbenstange an einer Karosseriestruktur 2 des Fahrzeugs abgestützt bzw. gelagert oder befestigt ist. Hierfür ist die nur sehr bruchstückhaft dargestellte Karosseriestruktur 2 bspw. wie üblich als sog. Federbeindom gestaltet und weist eine kreisförmige Durchtrittsöffnung 3 auf, in welcher das in seiner Gesamtheit mit der Bezugsziffer 10 gekennzeichnete Stützlager für den Dämpfer ("Dämpfer" ist ein Synonym für "Schwingungsdämpfer") angeordnet ist.

Bestandteile des Stützlagers 10 sind insbesondere ein Stützlagerflansch 11, ein grundsätzlich üblicher Stützlagerdeckel 12* und hier weiterhin eine sog. Stützlager-Mutter 120 (Fig.1) bzw. 121 (Fig.2a), sowie (wie üblich) ein in Elastomer-Metall-Mischbauweise ausgeführtes Lagerungselement 13 für die Kolbenstange, welches hier im Stützlagerflansch 11 angeordnet bzw. gelagert ist und seinerseits in üblicher Weise die Kolbenstange des Dämpfers trägt. Nicht figürlich dargestellt ist vorliegend eine Federauflage, über welche eine ebenfalls nicht gezeigte Tragfeder in üblicher Weise in einem Bereich F des Stützlagers 10 abgestützt ist. Über eine solche Tragfeder ist die Karosserie des Fahrzeugs anteilig an der Radaufhängung bzw. am Rad des Fahrzeugs, welcher bzw. welchem der Dämpfer zugeordnet ist, abgestützt.

Der bezüglich der Dämpfer-Längsachse L zumindest annähernd rotationssymmetrische Stützlagerflansch 11 weist eine ringförmige und im Einbauzustand im Fahrzeug annährend horizontal liegende Grundstruktur 11a auf, von welcher konzentrisch zur Dämpfer-Längsachse L ein kreiszylindrischer Kragen 11b in der Figurendarstellung sowie im realen Einbauzustand nach oben abragt. Mit diesem Kragen 11b durchdringt der Stützlagerflansch 11 die Durchtrittsöffnung 3 in der Karosseriestruktur 2, wobei ein in Radialrichtung R bezüglich der Längsachse L außerhalb des Kragens 11b liegender Ringabschnitt 11ar der Grundstruktur 11a an der Unterseite der Karosseriestruktur 2 anliegt. Dasjenige Ringsegment der Karosseriestruktur 2, an welchem der soeben genannte Ringabschnitt 11ar der Grundstruktur 11a anliegt, wird als Randringabschnitt 2a der Karosseriestruktur 2 bezüglich der Durchtrittsöffnung 3 bezeichnet. Es weist der kreiszylindrische (und einen Hohlzylinder beschreibende) Kragen 11b an seiner außenseitigen Mantelfläche ein Außengewinde auf, auf welches die Stützlager-Mutter 120 bzw. 121, welche wie eine übliche Schraubenmutter gestaltet ist oder gestaltet sein kann, mit ihrem Innengewinde aufgeschraubt ist. Dieses Innengewinde und das genannte Außengewinde sind gesamthaft mit dem Buchstaben G gekennzeichnet.

Noch kurz auf die Anordnung des bereits genannten und quasi als Lagerbock für die Kolbenstange 1 des Dämpfers 1 im Stützlagerflansch 11 fungierenden Lagerungselements 13 eingehend ist dieses Lagerungselement 13 wie bei Dämpfer-Stützlagern üblich durch ein annährend hohlzylindrisches Elastomerelement 13a gebildet, welches eine kreisringförmige metallische Scheibe 13b in ihrem Randbereich umgreift und damit trägt, wobei die Kolbenstange des Dämpfers mit einem Gewindestangenabschnitt durch eine zentrale Durchtrittsöffnung in der Scheibe 13b hindurchgesteckt und an dieser mittels einer Schraubenmutter befestigt ist (nicht gezeigt).

Nunmehr auf das Ausführungsbeispiel von Fig.1 Bezug nehmend ist bei diesem zwischen der Stützlager-Mutter 120 und dem Randringabschnitt 2a der Karosseriestruktur 2 ein Spann-Hilfselement 16 vorgesehen, welches sowohl als Unterlegscheibe als auch als geringfügig federndes Element fungiert, und das insbesondere die Aufrechterhaltung der benötigten Spannkraft zum Sichern des Stützlagerflansches 11 an der Karosseriestruktur 2 unter allen Umständen gewährleistet. Weiterhin schützt das Spann-Hilfselement 16 aufgrund seiner Unterlegscheiben-Funktion auch die vor der Montage des Stützlagers 10 üblicherweise bereits lackierte Karosseriestruktur 2 vor Beschädigung bzw. Abreiben der Lackschicht beim Festdrehen der Stützlager-Mutter 120. Insbesondere jedoch weist das Spann-Hilfselement 16 in gewissem aber ausreichendem Umfang eine Federeigenschaft nach Art einer zwischen dem Randringabschnitt 2a der Karosseriestruktur 2 und der Stützlager-Mutter 120 liegenden Tellerfeder auf und gewährleistet somit unter allen (widrigen) Umständen die Aufrechterhaltung einer ausreichenden Spannkraft (oder Vorspannung) in der durch die vom mit dem Gewinde G versehenen Kragen 11b des Stützlagerflansches 11 und von der Stützlager-Mutter 120 gebildeten Schraubverbindung. Vorliegend wird diese Federeigenschaft im Wesentlichen durch die Formgebung des Spann-Hilfselementes 16 erzielt. Dieses weist nämlich einen Ringflansch 16a auf, mit welchem es auf dem Randringabschnitt 2a der Karosseriestruktur 2 aufliegt. An diesen Ringflansch 16a schließt sich ein Übergangsabschnitt 16b an, der in einen sog. Kraftübertragungsabschnitt 16c übergeht, welcher nach Art eines Hohlzylinders mit der Längsachse L des Gewindes G ausgebildet ist und einen Abschnitt des Kragens 11b umhüllt. Auf dem Kraftübertragungsabschnitt 16c liegt die Stützlager-Mutter 120 auf bzw. wirkt auf diesen beim Festziehen pressend ein. Indem der Übergangsabschnitt 16b bei Betrachtung von der Längsachse L des Gewindes G aus (und somit quasi von innen betrachtet) gegenüber der Längsachse L des Gewindes G schräg oder geneigt verläuft und somit einen Kegelwandabschnitt bildet, so, dass der Kraftübertragungsabschnitt 16c in Längsachsrichtung L des Gewindes G betrachtet nicht auf dem Randringabschnitt 2a der Karosseriestruktur aufliegt, kann das Spann-Hilfselement 16 wie eine Tellerfeder wirken. Verstärkt wird diese Wirkung dadurch, dass der Übergangsabschnitt 16b des Spann-Hilfselements 16 auch bei Betrachtung von außen gegenüber der Längsachse L des Gewindes G geneigt verläuft.

Weiterhin sind am Übergangsabschnitt 16b des Spann-Hilfselements 16 über dessen Umfang verteilt mehrere Stützrippen 16d vorgesehen, über welche in Verbindung der Wandstärke des Übergangsabschnitts 16b die Federrate bzw. Federsteifigkeit des Spann-Hilfselements 16 gezielt festlegbar ist. Vorliegend sind diese Stützrippen 16d an der Wand-Innenseite des einen hohlen Kegelstumpf darstellenden Übergangsabschnittes 16b vorgesehen. Alternativ können solche Stützrippen, welche mit ihrem Verlauf in einer Projektion auf die Längsachse L betrachtet quasi mit dieser zusammen fallen, auch auf der Außenseite der Mantelfläche des besagten Kegelstumpfes vorgesehen sein. Insbesondere im letztgenannten Fall bzw. wenn sich auf der Innenseite keine Stützrippen befinden kann ein weiterer Vorteil dieses Spann-Hilfselements 16 darin bestehen, dass dieses Unebenheiten im Randringabschnitt 2a der Karosseriestruktur 2 überbrückt. Solche Unebenheiten können beispielsweise aus Schweißpunkten zwischen verschiedenen Karosserieblechen resultieren, welche in diesem Randringabschnitt 2a aufeinander treffen und hier miteinander verschweißt sind.

Ferner sei darauf hingewiesen, dass vorliegend die Stützlager-Mutter 120 und der Stützlagerdeckel 12* voneinander getrennte separate Bauteile sind, jedoch kann dies auch anders gestaltet sein, d.h. insbesondere können die Stützlager-Mutter 120 und der Stützlagerdeckel 12* ein in sich zusammenhängendes "gemeinsames" Bauteil sein. Im übrigen ist beim gezeigten Ausführungsbeispiel der Kragen 11b des Stützlagerflanschs 11 von der dem Schwingungsdämpfer 1 bzw. dessen Dämpferkolben bzw. von der der Radaufhängung zugewandten Seite der Karosseriestruktur 2 her durch deren Durchtrittsöffnung 3 hindurch gesteckt, so dass sich die Stützlager-Mutter 120 auf der dem Rad oder der eigentlichen Radaufhängung abgewandten Seite der Karosseriestruktur 2 befindet, jedoch kann dies auch umgekehrt gestaltet sein.

Kurz hingewiesen sei noch auf die Gestaltung des Stützlagerdeckels 12*, welcher hier (ebenfalls) näherungsweise die Gestalt eines hohlen kreiszylindrischen Ringes besitzt, an dessen Innenwand wie figürlich dargestellt einige Aussparungen, welche keine separate Bezugsziffer tragen, vorgesehen sind. An diesen Aussparungen kann ein nicht gezeigter Gegenhalter beim automatischen Verschrauben der Stützlager-Mutter 120 angreifen.

Nunmehr auf das zweite Ausführungsbeispiel nach den Fig.2a, Fig.2b eingehend erkennt man in Fig.2a, dass einige Elemente ähnlich wie beim ersten Ausführungsbeispiel gestaltet sind, dass jedoch kein Spann-Hilfselement (16) vorgesehen ist, sondern dass die Stützlager-Mutter 121 hier direkt auf dem Randringabschnitt 2a der Karosseriestruktur 2 aufliegt. Bei diesem Ausführungsbeispiel wird die nötige Vorspannung oder Spannkraft in der durch die Stützlager-Mutter 121 und den Kragen 11b des Stützlagerflansches 11 (mit dem besagten Gewinde G) gebildeten Schraubverbindung durch eine Maßnahme oder Formgebung zur Erhöhung der Elastizität des Kragens 11b in Richtung der Längsachse L des Gewindes G gewährleistet. Diese elastizitätserhöhende Formgebung des Kragens 11b ist dabei durch mehrere Segmente 11c und Sektoren 11d in der Wand des Kragens 11b oder in einem Übergangsbereich zwischen der Grundstruktur 11a und dem Kragen 11b des Stützlagerflansches 11 gebildet, welche gegenüber einem ihnen benachbarten Abschnitt der jeweiligen Struktur eine reduzierte Wandstärke besitzen. Die genannten Segmente 11c sind dabei im Bereich des Gewindes G vorgesehen und besitzen - wie Fig.2b zeigt - näherungsweise die Form eines Rechtecks, dessen längere Kante parallel zur Längsachse L des Gewindes G verläuft. Die genannten Sektoren 11d hingegen befinden sich im Übergangsbereich vom Kragen 11b zur Grundstruktur 11a bzw. in einem ringförmigen Abschnitt der Grundstruktur 11a, an den sich der bereits genannte Ringabschnitt 11ar der Grundstruktur 11a anschließt. Dabei können selbstverständlich auch nur die besagten Segmente 11c oder die besagten Sektoren 1d, jeweils mehrfach vorgesehen und vorzugsweise gleichmäßig über dem Umfang des Stützlagerflansches 11 verteilt, vorgesehen sein.

## Patentansprüche

1. Stützlager (10) eines Schwingungsdämpfers (1) oder einer Dämpfer-Feder-Einheit in der Radaufhängung eines Fahrzeugs mit einem an einer Karosseriestruktur (2) des Fahrzeugs abgestützten und kraftschlüssig befestigten Stützlagerflansch (11), welcher ein ringförmiges Elastomerelement (13a) umgreift, in welchem ein Element des Dämpfers (1) und insbesondere dessen Kolbenstange (1a) aufgehängt ist, und wobei der Stützlagerflansch (11) mit einem kreisringförmigen und einen Hohlzylinder bildenden Kragen (11b), dessen Zylinderachse zumindest annährend mit der Längsachse (L) des Schwingungsdämpfers (1) zusammenfällt, eine Durchtrittsöffnung (3) in der Karosseriestruktur (2) soweit durchdringt, dass auf ein auf der Außenwand dieses Kragens (11b) vorgesehenes Gewinde (G) eine Stützlager-Mutter (120) oder ein nach Art einer Überwurfmutter gestalteter Stützlagerdeckel aufschraubbar und aufgeschraubt ist, welche oder welcher sich letztlich an der Karosseriestruktur abstützend den Stützlagerflansch (11) zur Karosseriestruktur (2) hin zieht, so dass ein die Durchtrittsöffnung (3) umgebender Randringabschnitt (2a) der Karosseriestruktur (2) zwischen dem Stützlagerflansch (11) und der Stützlager-Mutter (120) oder dem Stützlagerdeckel eingespannt ist,
**dadurch gekennzeichnet, dass** eine über die Gestaltung der Stützlager-Mutter (120) und des Gewindes (G) hinausgehende Maßnahme zur Erhöhung der Vorspannkraft in der Gewinde-Verbindung (G) zwischen der Stützlager-Mutter (120) und dem Kragen (11b) vorgesehen ist,
wofür der Kragen (11b) eine dessen Elastizität in Richtung der Längsachse des Gewindes (G) erhöhende Formgebung aufweist, so dass der Kragen (11b) des Stützlagerflansches (11) in Richtung der Längsachse (L) des genannten Gewindes (G) betrachtet geringfügig elastisch verformbar ist.

2. Stützlager nach Anspruch 1, **dadurch gekennzeichnet, dass** eine über die Gestaltung der Stützlager-Mutter (120) und des Gewindes (G) hinausgehende Maßnahme zur Erhöhung der Vorspannkraft in der Gewinde-Verbindung (G) zwischen der Stützlager-Mutter (120) und dem Kragen (11b) vorgesehen ist, wofür zwischen der Stützlager-Mutter (120) und der Karosseriestruktur ein Spann-Hilfselement (16) eingespannt ist.

3. Stützlager nach Anspruch 1 oder 2, wobei die elastizitätserhöhende Formgebung des Kragens durch mehrere Sektoren (11d) oder Segmente (11c) mit gegenüber einem benachbarten Abschnitt reduzierter Wandstärke gebildet ist.

4. Stützlager nach Anspruch 3, wobei die Segmente (11c) im Bereich des Gewindes (G) vorgesehen sind und näherungsweise die Form eines Rechtecks besitzen, dessen längere Kante parallel zur Längsachse des Gewindes (G) verläuft.

5. Stützlager nach einem der vorangegangenen Ansprüche, wobei das Spann-Hilfselement (16) einen auf der Karosseriestruktur (2) aufliegenden Ringflansch (16a) und einen sich hieran direkt oder indirekt anschließenden und sich in Richtung der Längsachse (L) des Gewindes (G) zur Stützlager-Mutter (120) oder zum Stützlagerdeckel hin erstreckenden hohlzylindrischen Kraftübertragungsabschnitt (16c) besitzt, dessen Durchmesser geringer ist als der Außendurchmesser oder ein mittlerer Durchmesser des Ringflansches (16a).

6. Stützlager nach Anspruch 5, wobei das Spann-Hilfselement (16) bei Betrachtung von außen einen gegenüber der Längsachse (L) des Gewindes (G) geneigten linearen oder konkav oder konvex gekurvten Übergangsabschnitt (16b) zwischen dem Ringflansch (16a) und dem hohlzylindrischen Kraftübertragungsabschnitt (16c) besitzt, welcher bei Betrachtung von der Längsachse (L) des Gewindes (G) aus gegenüber der Längsachse (L) des Gewindes (G) ebenfalls geneigt solchermaßen verläuft dass der Kraftübertragungsabschnitt (16c) in Längsachsrichtung (L) des Gewindes (G) betrachtet nicht auf dem Randringabschnitt (2a) der Karosseriestruktur (2) aufliegt, womit das Spann-Hilfselement (16) nach Art einer Tellerfeder eine Federeigenschaft in Richtung der Längsachse (L) des Gewindes (G) besitzt.

7. Stützlager nach Anspruch 5 oder 6, wobei am Spann-Hilfselement (16) zwischen dem Ringflansch (16a) und dem hohlzylindrischen Kraftübertragungsabschnitt (16c) oder am Übergangsabschnitt (16b) mehrere versteifende Rippen (16d) vorgesehen sind.

8. Karosseriestruktur (2) umfassend ein Stützlager nach einem der vorangegangenen Ansprüche, wobei der Stützlagerflansch (11) mit seinem Kragen (11b) von der dem Schwingungsdämpfer (1) oder der Radaufhängung zugewandten Seite der Karosseriestruktur (2) her durch die Durchtrittsöffnung (3) hindurch gesteckt ist.

## Claims

1. Supporting bearing (10) of a vibration damper (1) or a damper/spring unit in the wheel suspension system of a vehicle with a supporting bearing flange (11) which is supported on and fastened in a non-positive manner to a vehicle body structure (2) of the vehicle, which supporting bearing flange (11) engages around an annular elastomer element (13a), in which an element of the damper (1) and, in particular, its piston rod (1a) is suspended, the supporting bearing flange (11) penetrating a passage opening (3) in the vehicle body structure (2) with a circular collar (11b) which forms a hollow cylinder, the cylinder axis of which coincides at least approximately with the longitudinal axis (L) of the vibration damper (1), to such an extent that a supporting bearing nut (120) or a supporting bearing cover which is designed in the manner of a union nut can be screwed and is screwed onto a thread (G) which is provided on the outer wall of the said collar (11b), which supporting bearing nut (120) or supporting bearing cover pulls the supporting bearing flange (11) towards the vehicle body structure (2) in a manner which is supported ultimately on the vehicle body structure, with the result that an edge ring section (2a) of the vehicle body (2), which edge ring section (2a) surrounds the passage opening (3), is clamped in between the supporting bearing flange (11) and the supporting bearing nut (120) or the supporting bearing cover, **characterized in that** a measure for increasing the prestressing force in the threaded connection (G) between the supporting bearing nut (120) and the collar (11b) is provided, which measure goes beyond the design of the supporting bearing nut (120) and the thread (G), for which purpose the collar (11b) has a shape which increases its elasticity in the direction of the longitudinal axis of the thread (G), with the result that the collar (11b) of the supporting bearing flange (11) can be elastically deformed slightly as viewed in the direction of the longitudinal axis (L) of the said thread (G).

2. Supporting bearing according to Claim 1, **characterized in that** a measure for increasing the prestressing force in the threaded connection (G) between the supporting bearing nut (120) and the collar (11b) is provided, which measure goes beyond the design of the supporting bearing nut (120) and the thread (G), for which purpose a clamping aid element (16) is clamped in between the supporting bearing nut (120) and the vehicle body structure.

3. Supporting bearing according to Claim 1 or 2, the elasticity-increasing shape of the collar being formed by way of a plurality of sectors (11d) or segments (11c) with a wall thickness which is reduced in comparison with an adjoining section.

4. Supporting bearing according to Claim 3, the segments (11c) being provided in the region of the thread (G) and having approximately the form of a rectangle, the longer edge of which runs parallel to the longitudinal axis of the thread (G).

5. Supporting bearing according to one of the preceding claims, the clamping aid element (16) having an annular flange (16a) which lies on the vehicle body structure (2), and a hollow-cylindrical force transmission section (16c) which adjoins the former directly or indirectly and extends in the direction of the longitudinal axis (L) of the thread (G) towards the supporting bearing nut (120) or towards the supporting bearing cover, the diameter of which force transmission section (16c) is smaller than the external diameter or a mean diameter of the annular flange (16a).

6. Supporting bearing according to Claim 5, the clamping aid element (16) having, as viewed from the outside, a linear or concavely or convexly curved transition section (16b) between the annular flange (16a) and the hollow-cylindrical force transmission section (16c), which transition section (16c) is inclined with respect to the longitudinal axis (L) of the thread (G) and, as considered from the longitudinal axis (L) of the thread (G), likewise runs in an inclined manner with respect to the longitudinal axis (L) of the thread (G) in such a way that the force transmission section (16c), as viewed in the longitudinal axial direction (L) of the thread (G), does not lie on the edge ring section (2a) of the vehicle body structure (2), whereby the clamping aid element (16) has, in the manner of a cup spring, a spring property in the direction of the longitudinal axis (L) of the thread (G).

7. Supporting bearing according to Claim 5 or 6, a plurality of reinforcing ribs (16d) being provided on the clamping aid element (16) between the annular flange (16a) and the hollow-cylindrical force transmission section (16c) or on the transition section (16b).

8. Vehicle body structure (2) comprising a supporting bearing according to one of the preceding claims, the supporting bearing flange (11) being plugged with its collar (11b) through the passage opening (3) from that side of the vehicle body structure (2) which faces the vibration damper (1) or the wheel suspension system.

## Revendications

1. Palier de support (10) d'un amortisseur de vibrations (1) ou d'une unité à amortisseur à ressort dans la suspension de roue d'un véhicule, le palier de support comprenant une bride (11) qui est supportée par une structure de carrosserie (2) du véhicule, qui est fixée en force et qui s'engage autour d'un élément annulaire (13a) en élastomère dans lequel est suspendu un élément de l'amortisseur (1) et en particulier la tige de piston (la) de celui-ci, et la bride (11) du palier de support pourvue d'un rebord annulaire (11b), qui forme un cylindre creux et dont l'axe de cylindre coïncide au moins approximativement avec l'axe longitudinal (L) de l'amortisseur de vibrations (1), pénétrant dans une ouverture de passage (3) ménagée dans la structure de carrosserie (2) jusqu'à ce qu'un écrou (120) du palier de support ou un couvercle du palier de support, conçu à la manière d'un écrou d'accouplement, puisse être vissé et soit vissé sur un filetage (G) prévu sur la paroi extérieure de ce rebord (11b), lequel écrou ou couvercle du palier de support tire finalement, en s'appuyant sur la structure de carrosserie, la bride (11) du palier de support en direction de la structure de carrosserie (2) de sorte qu'une portion de bord annulaire (2a) de la structure de carrosserie (2), qui entoure l'ouverture de passage (3), soit serrée entre la bride (11) du palier de support et l'écrou (120) du palier de support ou du couvercle du palier de support,
**caractérisé en ce qu'**une mesure allant au-delà de la conception de l'écrou (120) du palier de support et du filetage (G) est prévue pour augmenter la force de précontrainte dans la liaison par filetage (G) entre l'écrou (120) du palier de support et le rebord (11b), ce pour quoi le rebord (11b) a une conformation augmentant son élasticité en direction de l'axe longitudinal du filetage (G) de sorte que le rebord (11b) de la bride (11) du palier de support soit légèrement déformable élastiquement lorsque l'on regarde dans la direction de l'axe longitudinal (L) dudit filetage (G).

2. Palier de support selon la revendication 1, **caractérisé en ce qu'**une mesure allant au-delà de la conception de l'écrou (120) du palier de support et du filetage (G) est prévue entre l'écrou (120) du palier de support et le rebord (11b) pour augmenter la force de précontrainte dans la liaison par filetage (G), ce pour quoi un élément de serrage auxiliaire (16) est serré entre l'écrou (120) du palier de support et la structure de carrosserie.

3. Palier de support selon la revendication 1 ou 2, la conformation du rebord augmentant l'élasticité étant formée par une pluralité de secteurs (11d) ou de segments (11c) ayant une épaisseur de paroi réduite par rapport à une portion adjacente.

4. Palier de support selon la revendication 3, les segments (11c) étant prévus dans la zone du filetage (G) et ayant approximativement la forme d'un rectangle dont le grand côté est parallèle à l'axe longitudinal du filetage (G).

5. Palier de support selon l'une des revendications précédentes, l'élément de serrage auxiliaire (16) possédant une bride annulaire (16a) qui vient en appui sur la structure de carrosserie (2) et une portion de transmission de force (16c) en forme de cylindre creux qui se raccorde directement ou indirectement à ladite bride annulaire, qui s'étend dans la direction de l'axe longitudinal (L) du filetage (G) vers l'écrou (120) du palier de support ou vers le couvercle du palier de support et dont le diamètre est inférieur au diamètre extérieur ou à un diamètre moyen de la bride annulaire (16a).

6. Palier de support selon la revendication 5, lorsque l'on regarde depuis l'extérieur, l'élément de serrage auxiliaire (16) comportant une portion de transition linéaire (16b) ou incurvée concave ou convexe, qui est inclinée par rapport à l'axe longitudinal (L) du filetage (G) entre la bride annulaire (16a) et la portion de transmission de force (16c) en forme de cylindre creux qui s'étend, lorsque l'on regarde depuis l'axe longitudinal (L) du filetage (G), également de manière inclinée par rapport à l'axe longitudinal (L) du filetage (G) de sorte que la portion de transmission de force (16c) ne vient pas en appui sur la portion de bord annulaire (2a) de la structure de carrosserie (2), lorsque l'on regarde dans la direction de l'axe longitudinal (L) du filetage (G), de sorte que l'élément de serrage auxiliaire (16) présente une propriété de ressort dans la direction de l'axe longitudinal (L) du filetage (G) à la manière d'un ressort à disque.

7. Palier de support selon la revendication 5 ou 6, plusieurs nervures de renforcement (16d) étant prévues au niveau de l'élément de serrage auxiliaire (16) entre la bride annulaire (16a) et la portion de transmission de force (16c) en forme de cylindre creux ou au niveau de la portion de transition (16b).

8. Structure de carrosserie (2) comprenant un palier de support selon l'une des revendications précédentes, la bride (11) du palier de support pourvue de son rebord (11b) étant enfichée à travers l'ouverture de passage (3) depuis le côté de la structure de carrosserie (2) qui est dirigé vers l'amortisseur de vibrations (1) ou la suspension de roue.
